# EUROPEAN PATENT APPLICATION

(11) **EP 3 315 858 A1**
(43) Date of publication of application: **02.05.2018**
(21) Application number: 16814751.0
(22) Date of filing: 24.06.2016
(51) Int. Cl.: F21V 19/00, F21S 2/00, F21V 17/10, F21V 17/16, F21Y 105/00

(54) **LIGHTING MODULE TIGHTENING DEVICE FOR LAMP**

(30) Priority: 26.06.2015 KR 20150091236; 11.02.2016 KR 20160015480; 18.05.2016 KR 20160060832; 23.06.2016 KR 20160078633
(71) Applicant: Jeon, Byung Joon, Daegu 41262 (KR)
(72) Inventor: Jeon, Byung Joon, Daegu 41262 (KR)
(74) Representative: BRP Renaud & Partner mbB Rechtsanwälte Patentanwälte Steuerberater
(86) International application number: PCT/KR2016/006793
(87) International publication number: WO 2016/209038

(57) **Abstract**

The present invention relates to a lighting module tightening device for a lamp to easily attach and detach a module having a light source device for surface emission, such as an LED and an OLED, to or from a module. The lighting module tightening device includes: a power contact terminal part, formed on one side of the lamp, for receiving power and transmitting the power; a light source module part, having one side combined with the power contact terminal part, for receiving the power from the power contact terminal part and emitting the light; and a support part, configured to face the power contact terminal part on the other side of the lamp, for supporting and being combined with the other side of the light emitting module part.

## Description

### [Technical Field]

The present invention relates to a lighting module tightening device for a lamp, and more particularly, to a lighting module tightening device for a lamp which allows a module including a lighting element for surface lighting, such as an LED or an OELD, to be easily attached to and detached from a lamp.

### [Background Art]

In general, as indoor lighting installed in an indoor space such as a home or an office, a light lamp, an incandescent lamp, and a halogen lamp are attached to a ceiling or a wall surface of a room.

Such indoor lighting has a drawback in that it consumes a large amount of power, generates heat, and has a short lifespan of about six months, and therefore needs to be frequently replaced. Particularly, a fluorescent lamp or an incandescent lamp is likely to break and is thus difficult to handle, and further may cause environmental pollution if it is broken while it is being collected.

On the other hand, the light emitting diode (LED) is a high efficiency light source having low power consumption and does not generate heat. Further, the LED has a long lifespan of about 100,000 hours and is thus drawing attention as a future lighting means.

Korean Utility Model No. 20-0463240 (Oct. 18, 2012) discloses a portable LED lamp which can illuminate a product displayed on a shelf or a stand through a plurality of lighting holes arranged at constant intervals in a lamp case by turning on a plurality of LEDs by pressing a one-touch button switch protruding from one end of the lamp case. According to the disclosed technology, there is provided an LED lamp including: a body having a one-touch button switch at one end and a male screw protruding from an opposite end; a plurality of LEDs housed in the body at constant intervals; a plurality of batteries each detachably inserted into an accommodation chamber formed between the LEDs, an LED lamp body equipped with a printed circuit board onto which the plurality of LEDs, the batteries and the one-touch button switch are soldered in the form of a closed circuit; a hollow portion into which the LED lamp body is detachably inserted; and a lamp case in which a plurality of lighting holes for projecting light emitted from each of the plurality of LEDs provided in the LED lamp body to the outside is formed at constant intervals; a closing cap for covering the opposite end of the lamp case, the closing cap being provided with a female screw inserted into the opposite end of the lamp case and screwed to the male screw protruding from the opposite end of the LED lamp body; a lamp installation groove allowing the lamp case to be detachably installed therein in order to illuminate various products displayed on a shelf by the light emitted from the plurality of LEDs arranged in the LED lamp body inserted into the lamp case; and a lamp mounting member capable of being selectively fixedly attached to the wall or floor of the shelf.

The conventional lighting device as described above is disadvantageous in that it is not easy for an unskilled person such as a child or a housewife to attach and detach a light emitting means such as a bulb or an LED light to a lamp in a household.

In the conventional lighting device as described above, when a part of the LED chip, which is a light emitting means, is broken, the part of the light emitting means cannot be replaced alone, and thus the entire light emitting means needs to be replaced, which results in waste of resources.

### [Disclosure]

### [Technical Problem]

The present invention has been made in view of the above problems, and it is an object of the present invention to provide a lighting module tightening device for a lamp which allows a module including a lighting element for surface lighting, such as an LED or an OLED, to be easily attached to and detached from a lamp.

### [Technical Solution]

In accordance with one aspect of the present invention, provided is a lighting module tightening device for a lamp, including a power source contact terminal portion formed on one side of the lamp and configured to be supplied with power and transmit the supplied power, a lighting module unit having one side tightened to the power source contact terminal portion and configured to receive power from the power source contact terminal portion to emit light, and a support formed on an opposite side of the lamp to face the power source contact terminal portion and configured to tighten and support an opposite side of the lighting module unit.

In one embodiment, the power source contact terminal portion may include a power supply means formed on the one side of the lamp and having two insertion grooves for applying power, the power supply means being configured to be supplied with external power and supply the external power through the insertion grooves, and two first contact means respectively provided in the insertion grooves and configured to provide elasticity to the lighting module unit when the lighting module unit is tightened into the insertion grooves and to transmit the power supplied through the insertion grooves to the lighting module unit.

In one embodiment, each of the first contact means may include a first power transmission member formed inside each of the insertion grooves to transmit the power supplied through the insertion grooves, a contact cover member arranged in each of the insertion grooves so as to slide along the insertion grooves in a reciprocating manner to contact the lighting module unit to transmit the power to the lighting module unit, and a first elastic member having one side fixed to the power transmission member and an opposite side fixed to the contact cover member to provide elasticity to the contact cover member and transmit the power from the power transmission member to the contact cover member when the lighting module unit is tightened into the insertion grooves.

In one embodiment, the lighting module unit may include two contact terminals tightened to the power source contact terminal portion on one side thereof to receive power from the power source contact terminal portion, a lighting module connected to an opposite side of the contact terminals and including one or more light emitting means to emit light by the power supplied from the power source contact terminal portion, and an elastic bar connected to an opposite side of the lighting module and tightened to the support.

In one embodiment, each of the contact terminals may include a terminal means having one side tightened to the power source contact terminal portion to receive the power, a connection means connected to the opposite side of the lighting module unit and provided with a through hole allowing the terminal means to be inserted thereinto and slidably move, a sliding means having one side fixed to one side of the terminal means so as to slidably move together with the terminal means and an opposite side slidably inserted into one side of the connection means, the sliding means being returned by elastic force applied thereto, and a first elastic means arranged between the connection means and the sliding means to provide the elastic force to the sliding means.

In one embodiment, the elastic bar may include a support means connected to the opposite side of the lighting module to support the lighting module, a fitting means slidably moved on an opposite side of the support means by the sliding means and returned by the elastic force applied thereto, an opposite side of the fitting means being fitted and tightened into the support, and one or more second elastic means arranged between the support means and the fitting means to provide the elastic force. In one embodiment, the lighting module unit may include a power transmission means having two slide grooves and configured to transmit power through the slide grooves, two second contact means formed in each of the slide grooves and configured to provide elasticity to the power source contact terminal portion when one side thereof is tightened to the power source contact terminal portion and to transmit the power received from the power source contact terminal portion to the slide grooves, and a light emitting means connected to the power transmission means and configured to emit light by applying the power transmitted through the slide grooves.

In one embodiment, each of the second contact means may include a second power transmission member formed in the slide grooves to transmit the power received from the power source contact terminal portion to the slide grooves, a terminal member provided therein with an accommodation groove and configured to slidably move along the slide grooves in a reciprocating manner to contact the power source contact terminal portion to transmit the power received from the power source contact terminal portion to the second power transmission member, and a second elastic member inserted into the accommodation groove to provide elasticity to the terminal member when the terminal member is tightened to the power source contact terminal portion.

In one embodiment, the lighting module unit may further include a grip member formed at a lower portion of the one side of the lighting module unit, and lowered or raised by a finger placed therearound.

In one embodiment, the support may include a housing member fixedly installed in at least one area of the lamp, and a tightening groove member formed inside the housing member such that the one side of the lighting module unit is inserted and tightened thereinto.

In one embodiment, the support may further include an elastic member arranged in the tightening groove member and configured to provide elasticity to the one side of the lighting module unit when the one side of the lighting module unit is inserted and tightened into the tightening groove member.

In one embodiment, the elastic member may include an elastic unit accommodated in the tightening groove member and configured to provide elasticity to the lighting module unit when the lighting module unit is tightened to the tightening groove member, and a contact cover unit having one side fixed to the elastic unit and an opposite side contacting the lighting module unit to transmit force transmitted from the lighting module unit to the elastic unit.

In one embodiment, the housing member further may include a pushing member installed in and connected to the tightening groove member and configured to push the lighting module unit.

In one embodiment, the pushing member may include a pushing unit formed in the tightening groove member and reciprocating along the tightening groove member to contact and push the lighting module unit forward, and a spring unit having one side fixed to the pushing unit and an opposite side fixed to an inside of the tightening groove member to provide elasticity to the pushing unit when the lighting module unit is pushed out of the tightening groove member.

In one embodiment, the housing member may be inclined inward or outward at an angle.

In one embodiment, the housing member may be formed in an L shape to allow a corner of the lighting module unit to be inserted and tightened thereinto.

In one embodiment, the housing member may include a plurality of elastic members formed inside the housing member.

### [Advantageous Effects]

According to an embodiment of the present invention, there is provided a lighting module tightening device for a lamp which allows a module including a lighting element for surface lighting, such as an LED or an OLED, to be easily attached to and detached from a lamp. Thereby, an operator may easily attach and detach the light emitting means to and from a lamp.

According to an embodiment of the present invention, an operator may be protected from a risk of accidents that may be caused by detachment and attachment of the whole lamp in replacing a flat lighting module as a light emitting means, and even an individual consumer who is unskilled can easily perform attachment and detachment.

According to an embodiment, horizontal shift of the light emitting means may be more effectively performed within the lamp such that the position of the light source and the power consumption of the module can be more finely adjusted to easily adjust the total intensity of light.

According to an embodiment of the present invention, when an LED chip, which is a light emitting means, is broken, only the corresponding faulty LED module needs to be replaced. Thereby, waste of resources caused by replacement of the whole light emitting means may be prevented.

### [Description of Drawings]

FIGS. 1 and 2 are views illustrating a lighting module tightening device for a lamp according to a first embodiment of the present invention.
FIG. 3 is a view illustrating a power source contact terminal portion according to an embodiment of the present invention.
FIG. 4 is a view illustrating operation of the power source contact terminal portion according to the embodiment of the present invention.
FIG. 5 is a view illustrating a lighting module unit according to a first embodiment of the present invention.
FIGS. 6 and 7 are views illustrating the contact terminal of FIG. 5.
FIG. 8 is a view illustrating a lighting module unit according to a second embodiment of the present invention.
FIG. 9 is a view illustrating operation of the lighting module unit shown in FIG. 8.
FIG. 10 is a view illustrating an elastic bar shown in FIG. 5.
FIG. 11 is a view illustrating a grip member 250 of a lighting module unit 200 according to an embodiment of the present invention.
FIGS. 12 and 13 are views illustrating a support according to the first embodiment of the present invention.
FIGS. 14 and 15 are views illustrating a support according to a second embodiment of the present invention.
FIGS. 16 and 17 are views illustrating a support according to a third embodiment of the present invention.
FIG. 18 illustrates a lighting module tightening device for a lamp to which the support shown in FIGS. 14 to 17 is applied.

### [Best Mode]

Hereinafter, embodiments of the present invention will be described in detail with reference to the accompanying drawings. However, the description of the present invention is merely an example for structural or functional explanation, and the scope of the present invention should not be construed as being limited by the embodiments described in the text. That is, the embodiments are to be construed as being variously embodied and having various forms, and therefore the scope of the present invention should be understood as including equivalents capable of realizing technical ideas. The scope of the present invention should not be construed as being limited by the objects or effects of the present invention disclosed herein because the disclosed objects or effects do not mean that a specific embodiment should include all the objects or effects or should include only the disclosed effects.

Meanwhile, the meaning of the terms used herein should be understood as follows.

Terms including ordinal numbers such as first, second, etc. are used to distinguish one component from another, and the scope of the invention should not be limited by these terms. For example, a first component may be referred to as a second component, and similarly, the second component may also be referred to as a first component.

When it is stated that one component is "connected" to another, this statement should be understood as meaning that one component may be directly connected to another one or another component may be interposed between the components. On the other hand, when it is stated that one component is "directly connected" to another, this statement should be understood as meaning that no other component is interposed between the components. On the other hand, other expressions that describe the relationship between components, such as "between" and "directly between" or "adjacent to" and "directly adjacent to" should be interpreted similarly.

A singular expression includes a plural expression unless the two expressions are contextually different from each other. In this specification, the term "include" or "have" is intended to indicate that characteristics, figures, steps, operations, constituents, and components disclosed in the specification or combinations thereof exist. The term "include" or "have" should be understood as not precluding possibility of existence or addition of one or more other characteristics, figures, steps, operations, constituents, components, or combinations thereof.

Unless otherwise defined, all terms (including technical and scientific terms) used herein have the same meaning as generally understood by those skilled in the art. Terms as defined in a commonly used dictionary should be construed as having the same meaning as in an associated technical context and, unless clearly defined in the description, the terms are not ideally or excessively construed as having formal meanings.

Now, a lighting module tightening device for a lamp according to an embodiment of the present invention will be described in detail with reference to the drawings.

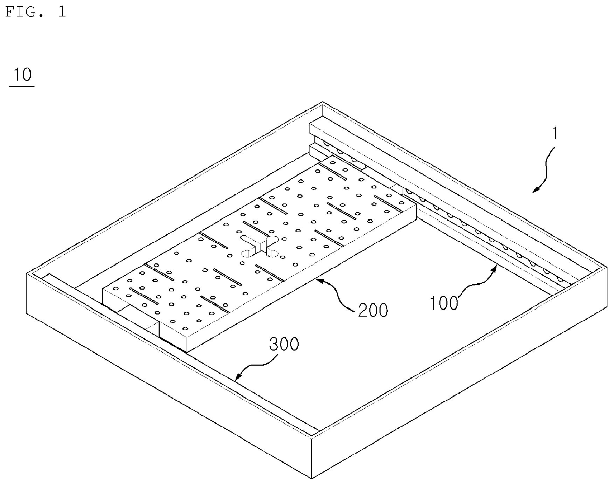

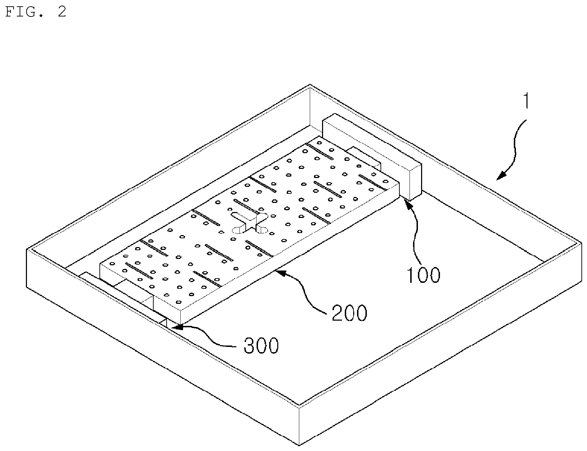

FIGS. 1 and 2 are views illustrating a lighting module tightening device for a lamp according to a first embodiment of the present invention.

Referring to FIGS. 1 and 2, a lighting module tightening device 10 for a lamp includes a power source contact terminal portion 100, a lighting module unit 200, and a support 300.

The power source contact terminal portion 100 is arranged on one side of a lamp 1 at a predetermined distance (that is, a space for tightening the lighting module unit 200) from the support 300 so as to be parallel to the support 300, receives power from a power supply (e.g., an external power source, an internal battery, etc.), and transmits the supplied power to the lighting module unit 200.

In an embodiment, the power source contact terminal portion 100 may be laterally elongated in a longitudinal direction to form a plurality of first contact means 120 for supplying power by tightening the lighting module unit 200 such that a user can tighten the lighting module unit 200, as shown in FIG. 1, and to form only a pair of first contact means 120 to tighten the lighting module unit 200 at a predetermined specific position as shown in FIG. 2.

The lighting module unit 200 is tightened to the power source contact terminal portion 100 at one side thereof and to the support 300 on the opposite side thereof, receives power from the power source contact terminal portion 100 and emits light with the received power.

In one embodiment, the lighting module unit 200 may include a DC converter circuit for converting AC power into DC power in case that the power received from the power source contact terminal portion 100 is the AC power.

The support 300 is arranged on the opposite side of the lamp 1 in parallel with the power source contact terminal portion 100 and spaced a certain distance (that is, a space for tightening the lighting module unit 200) from the power source contact terminal portion 100 to tighten and support the opposite side of the lighting module unit 200.

The lighting module tightening device 10 for a lamp that is configured as above may allow the lighting module unit 200 to be freely shifted to the left and right in the space between the power source contact terminal portion 100 and the support 300 and be installed as a desired left or right position and allow manufacture of the lighting module unit 200 with various widths

The lighting module unit 200 configured as above and having a lighting element for surface lighting such as an LED or an OLED can be easily attached to and detached from the lamp 1. Accordingly, an unskilled person such as a child or a housewife can more easily attach and detach the light emitting means to and from the lamp.

The lighting module tightening device 10 for a lamp configured as above may allow horizontal shift of the light emitting unit 200 to be more effectively performed within the lamp 1 such that the position of the light source and the power consumption of the module can be more finely adjusted to easily adjust the total intensity of light.

When an LED chip, which is a light emitting means, is broken, the lighting module tightening device 10 configured as above allows replacement of the faulty LED module 200 alone. Thereby, waste of resources caused by replacement of the whole light emitting means may be prevented.

The lighting module tightening device 10 for a lamp configured as above has a DC converter circuit in the lighting module unit 200, thereby may eliminate the need for use of a separate external DC converter.

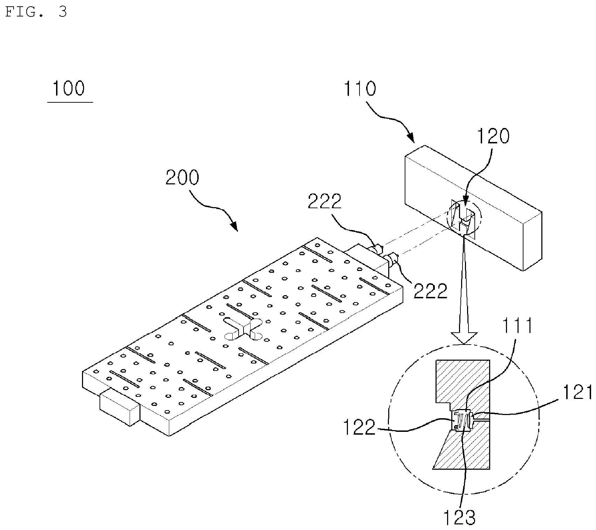

FIG. 3 is a view illustrating a power source contact terminal portion according to an embodiment of the present invention.

Referring to FIG. 3, the power source contact terminal portion 100 includes a power supply means 110 and a first contact means 120.

The power supply means 110 is coupled to one side of the lamp 1 to stably support the lighting module unit 200 and has two insertion grooves 111 for coupling with the lighting module unit 200. Once the lighting module unit 200 is inserted through the insertion grooves 111, the power supply means 110 is electrically connected to the lighting module unit 200 and supplies external power to the lighting module unit 200 through the insertion grooves 111.

In one embodiment, the upper or lower portion of the entrance of the insertion grooves 111 of the power supply means 110 may be inclined at a predetermined inclination (for example, an angle of 10° to 30°) such that the lighting module unit 200 can be easily inserted into the insertion grooves 111 along the inclined surface.

The first contact means 120 is accommodated in the two insertion grooves 111 formed in the power supply means 110 and transmits power supplied from the power supply means 110 through the insertion groove 111 to the lighting module 110. In particular, they provide elasticity to the lighting module unit 200 in response to a pressing force generated when the lighting module unit 200 is tightened to the insertion groove 111.

In one embodiment, the first contact means 120 may include a first power transmission member 121, a contact cover member 122 and a first elastic member 123.

The first power transmission member 121 is formed inside the two insertion grooves 111 and transmits the power supplied from the power supply means 110 to the lighting module unit 200 through the insertion groove 111. In other words, one of the two first power transmission members 121 is supplied with first power from an external power source and the other one is supplied with second power from the external power source. The first power transmission members transmit the supplied power to the lighting module unit 200.

In one embodiment, the first power transmission member 121 may be supplied with DC power from a DC power supply (e.g., an external power supply or an internal battery) and AC power from an AC power supply.

In one embodiment, the first power transmission member 121 may include a coupling projection 121-1 (see FIG. 3) to be inserted into and fixed to one side of a first elastic member 123 in order to secure firm coupling with the first elastic member 123. The coupling projection (see 121-1 in FIG. 3) and one side the first elastic member 123 may be tightened by thermal bonding.

The contact cover member 122 is formed in the insertion grooves 111 and has one side arranged to close the opening of the insertion grooves. When the lighting module unit 200 is inserted into the insertion grooves, the one side of the contact cover member 122 contacts the lighting module unit 200, and the contact cover member 122 slides along the insertion grooves in a reciprocating manner to transmit power received from the first power transmission member 121 to the lighting module unit 200. The contact cover member 122 is formed of a conductive material (e.g., iron, copper, or the like) to transmit power to the lighting module unit 200.

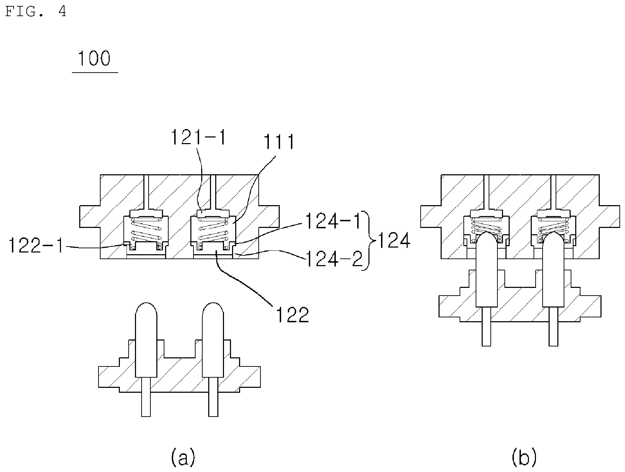

In one embodiment, the opposite side of the contact cover member 122 may be provided with a coupling groove 122-1 (see FIG. 4) to be coupled with the first elastic member 123 to insert and fix the opposite side of the first elastic member 123.

The first elastic member 123 is formed in the shape of a spring of a conductive material (e.g., iron, copper or the like) that has elasticity. The first elastic member 123 has one side fixedly installed on the first power transmission member 121 and an opposite side fixedly installed on the contact cover member 122. That is, the first elastic member 123 electrically connects the first power transmission member 121 and the contact cover member 122 so as to transmit the power from the first power transmission member 121 to the contact cover member 122. In addition, when the lighting module unit 200 is tightened into the insertion grooves 111, the first elastic member 123 provides elasticity to the contact cover member 122 such that the contact cover member 122 can slide along the insertion grooves 111 in a reciprocating manner by the elastic force provided by the contact cover member 122.

In one embodiment, the first contact means 120 may further include a first displacement prevention member 124 (see FIG. 4).

When the terminal member 222 of the lighting module unit 200 is removed from the insertion grooves 111, the first displacement prevention member 124 (see FIG. 3) prevents the contact cover member 122 provided with elastic force from the first elastic member 123 from being displaced from the insertion grooves 111.

In one embodiment, the first displacement prevention member 124 (see FIG. 4) may include a first engagement step 124-1 (see FIG. 4) and a first engagement projection 124-2 (see FIG. 4).

The first engagement step 124-1 (see FIG. 4) protrudes from and is formed on the inner surface of the insertion grooves 111 to hold the contact cover member 122 so as not to be displaced from the insertion grooves 111. The first engagement step 124-1 (see FIG. 4) may be formed in the shape of a continuous ring along the circumference of the insertion grooves 111 in a protruding manner. In some embodiments, a plurality of first engagement steps 124-1 may be formed on the inner surface of the insertion grooves 111 at constant intervals.

The first engagement projection 124-2 (see FIG. 4) protrudes from the outer surface of the contact cover member 122, and is engaged with the engagement step 124-1 (see FIG. 3) formed on the inner surface of the insertion grooves, thereby preventing the contact cover member 122 from being displaced from the insertion grooves 111.

FIG. 4 is a view illustrating operation of the power source contact terminal portion according to the embodiment of the present invention.

Referring to FIG. 4, as shown in FIG. 4(a), the contact cover member 122 closes the insertion grooves 111 to prevent foreign matter from being introduced into the insertion grooves 111 until the terminal member of the lighting module unit 200 is inserted.

On the other hand, as shown in FIG. 4(b), when one side of the lighting module unit 200 is inserted into the insertion grooves 111, the contact cover member 122 moves backward along the insertion grooves 111, and thus the user can easily connect the opposite side of the lighting module unit 200 to the support 300. Thereafter, when the opposite side of the lighting module unit 200 is coupled to the support 300, the contact cover member 122 may move forward along the insertion grooves to stably support the lighting module unit 200 in cooperation with the support 300.

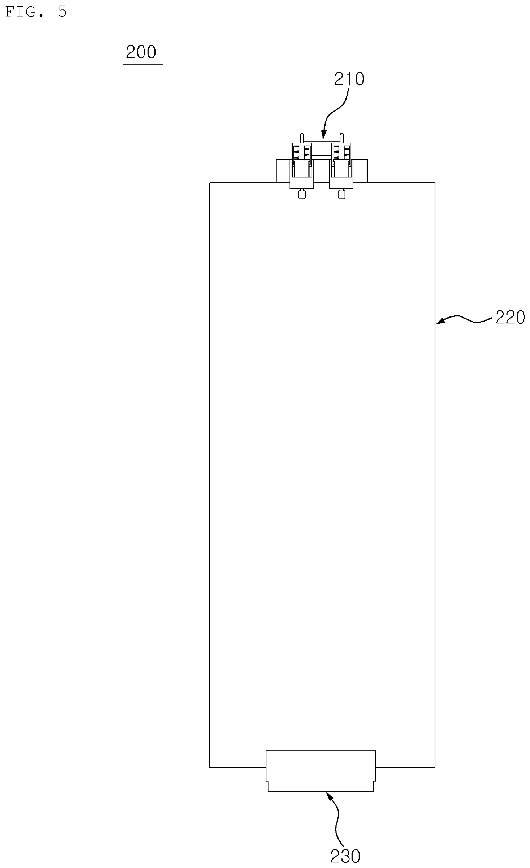

FIG. 5 is a view illustrating a lighting module unit according to a first embodiment of the present invention. Referring to FIG. 5, the lighting module unit 200 includes two contact terminals 210-1 and 210-2, a lighting module 220, and an elastic bar 230.

The contact terminal 210 is formed on one side of the lighting module unit 200 and has one side tightened to the power source contact terminal portion 100 (more specifically, the first terminal member 120 or the second terminal member 130) to receive power from the power source contact terminal portion 100, and transmits the received power to the lighting module 220.

The lighting module 220 is provided with the two contact terminals 210-1 and 210-2 on one side and the elastic bar 230 on the opposite side. The lighting module 220 includes a power conversion device (i.e., a DC power application circuit, not shown for simplicity) for converting the AC power received from the power source contact terminal portion 100 through the contact terminal 210 into DC power, and one or more light emitting means (e.g., LED bulbs, etc.) for emitting light using the DC power supplied from the power conversion device through the conversion operation.

The elastic bar 230 is connected to the opposite side of the lighting module 220 and is tightened to the support 300.

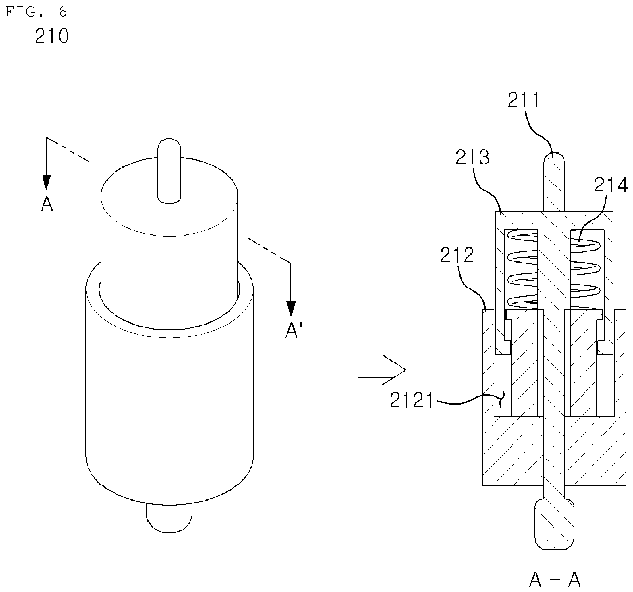

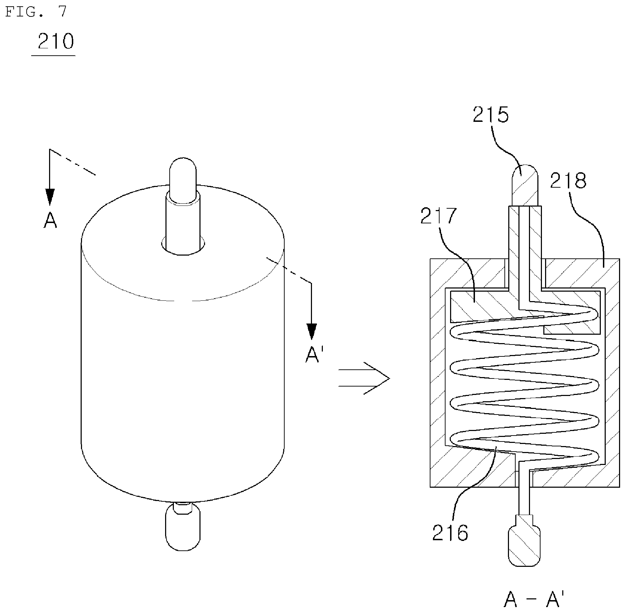

FIGS. 6 and 7 are views illustrating the contact terminal of FIG. 5.

Referring to FIG. 6, the contact terminal 210 includes a terminal means 211, a connection means 212, a sliding means 213 and a first elastic means 214.

The terminal means 211 has a one-side terminal end tightened to the power source contact terminal portion 100 and an opposite-side terminal end connected to a part (i.e., the power conversion device (not shown for simplicity)) for receiving power from the lighting module 220. One side of the terminal means 211 is fixedly mounted on one side of the sliding means 213 and slides together with the sliding means, and the opposite side of the terminal means 211 is inserted into the through hole of the connection means 212 to slide to receive power from the power source contact terminal portion 100 and transmit the received power to the lighting module 220.

The connection means 212 is connected to the opposite side of the lighting module 220 and has a through hole for inserting and sliding the terminal means 211.

One side of the sliding means 213 is fixed to one side of the terminal means 211 and slides together and the opposite side of the sliding means is inserted into one side of the connection means 212 (i.e., a groove 2121 for sliding movement) to be slidably moved and returned by elastic force applied by the first elastic means 214.

In one embodiment, the connection means 212 may be provided with a groove 2121 into which the opposite side of the sliding means 213 is inserted and slidably moved. The first elastic means 214 is arranged between the connection means 212 and the sliding means 213 and is formed of an elastic material (for example, a spring or the like) to provide elastic force to the sliding means 213.

Referring to FIG. 7, the contact terminal 210 includes a contact terminal means 215, a spring power terminal means 216, an upper pusher means 217, and an outer case means 218.

The contact terminal means 215 is formed of a conductive material, which has one-side terminal end connected to the power source contact terminal portion 100 and the opposite-side terminal end connected to the spring power terminal means 216, receives power from the power contact terminal portion 100 and transmits the received power to the spring power terminal means 216.

The spring power terminal means 216 is formed in the shape of a spring of an elastic conductive material, which has one-side terminal end tightened to the contact terminal means 215 and the opposite-side terminal end connected to another part (i.e., the power conversion device (not shown for simplicity)), receives power from the contact terminal means 215, and supplies the received power to the lighting module 220.

In one embodiment, the spring power terminal means 216 may be tightened on one side thereof to the contact terminal means 215 by thermal bonding.

The upper pusher means 217 is formed of an insulating material (e.g., plastics), into which one side of the spring power terminal means 216 is inserted to be tightened, and is slidably moved downward in the inner space of the outer case means 218 by elastic force of the spring power terminal means 216.

In one embodiment, the lower side surface of the upper pusher means 217 may be inclined to correspond to the curve of the spring power terminal means 216.

The outer case means 218 is formed of an insulating material (e.g., plastics) and forms an inner space. One side of the upper pusher means 217 is arranged through one side of the outer case means, and the opposite side of the spring power terminal means 216 is arranged through the opposite side of the outer case means. The spring power terminal means 216 and the upper pusher means 217 are inserted into the inner space, and the upper pusher means 217 is slidably moved from the upper portion of the inner surface by the elastic force of the spring power terminal means 216.

In one embodiment, the lower side surface of the outer case means 218 may be inclined to correspond to the curve of the spring power terminal means 216.

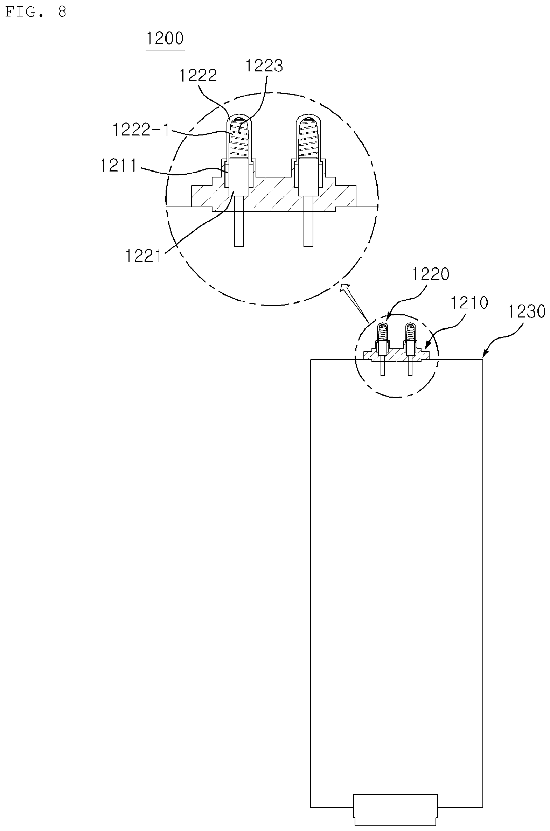

FIG. 8 is a view illustrating a lighting module unit according to a second embodiment of the present invention. Referring to FIG. 8, a lighting module unit 1200 includes a power transmission means 1210, two second contact means 1220, and a light emitting means 1230.

The power transmitting means 1210 is provided with two slide grooves 1211 at one side thereof which is coupled to the power source contact terminal portion 100, and transmits the power received from the power source contact terminal portion 100 to the light emitting means 1230 through the slide grooves 1211.

In one embodiment, the power transmission means 1210 may be fixedly coupled to the light emitting means 1230 on one side so as to be integrated with the light emitting means 1230.

The second contact means 1220 is accommodated in the two slide grooves 1211 to provide elasticity to the power source contact terminal portion 100 corresponding to the pressing force generated when one side thereof is tightened to the power source contact terminal portion 100. In addition, the second contact means 1220 transmits power from the power source contact terminal portion 100 to the slide grooves 1211 through coupling with the power contact terminal portion.

In one embodiment, the second contact means 1220 may include a second power transmission member 1221, a terminal member 1222, and a second elastic member 1223.

The second power transmission member 1221 is arranged in the slide grooves 1211 and is formed of a conductor (e.g., iron, copper, or the like) to transmit power, and thus transmits power from the power source contact terminal portion 100 to the slide grooves 1211. The second power transmission member 1221 receives power from the terminal member 1222 when at least one area of the outer circumferential surface thereof contacts the terminal member 1222. One end of the second power transmission member 1221 is coupled with one side of the second elastic member 1223 to stably support the second elastic member 1223 even when the terminal member 1222 slides in a reciprocating manner.

The terminal member 1222 is provided with an accommodation groove 1222-1 for accommodating the second elastic member 1223 therein, and slides along the slide groove 1211 in a reciprocating manner such that one side thereof is tightened to transmit the power received from the power source contact terminal portion 100 to the second power transmission member 1221. As the terminal member 1222 is inserted into the insertion groove 111 of the power source contact terminal portion 100, one side thereof is tightened to the power source contact terminal portion 100 and the terminal member 1222 slides along the slide groove 1211 in a reciprocating manner to transmit the power received from the power source contact terminal portion 100 to the second power transmission member 1221. The terminal member 1222 is formed of a conductive material (for example, iron, copper, or the like) to transmit the power received from the power source contact terminal portion 100 to the lighting module unit 1200.

In one embodiment, at least one region of the terminal member 1222 may protrude out of the slide groove 1211 in order to be coupled with the power source contact terminal portion 100.

In one embodiment, the terminal member 1222 may be horizontally arranged to correspond to the shape of the insertion groove 111 (see FIGS. 3 and 4) or may be vertically arranged (not shown).

The second elastic member 1223 is formed of an elastic material (for example, a spring or the like) and is inserted into the accommodation groove 1222-1 of the terminal member 1222 to provide elasticity to the terminal member 1222 when the terminal member 1222 is tightened to the power source contact terminal portion 100. That is, when the lighting module unit 200 is tightened into the insertion groove 111, the second elastic member 1223 provides elasticity to the terminal member 1222 such that the terminal member 1222 can slide along the slide groove 1211 in a reciprocating manner.

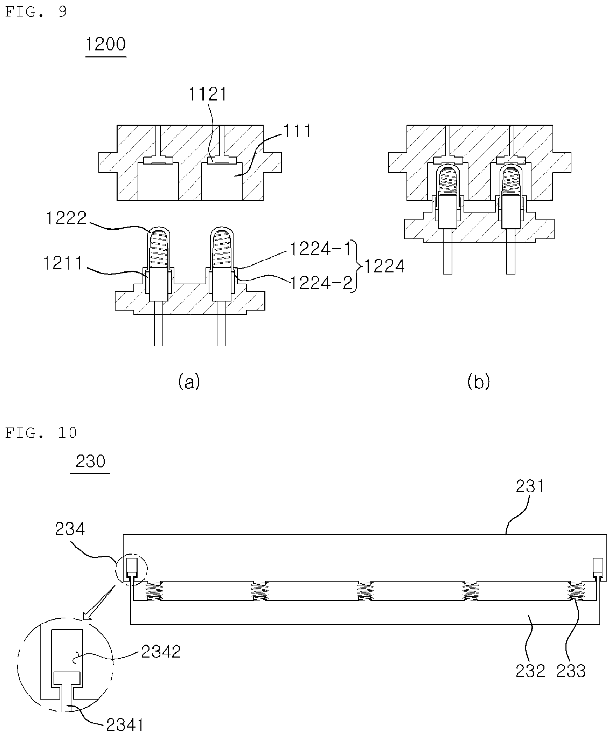

In one embodiment, the second contacting means 1220 may further include a second displacement prevention member 1224 (see FIG. 9).

When the terminal member 1222 of the lighting module unit 1200 is removed from the insertion groove 111, the second displacement prevention member 1224 (see FIG. 9) prevents the terminal member 1222 provided with an elastic force from the second elastic member 1223 from being displaced from the slide groove 1211.

In one embodiment, the second displacement prevention member 1224 (see FIG. 9) may include a second engagement step 1224-1 (see FIG. 9) and a second engagement projection 1224-2 (see FIG. 9).

The second engagement step 1224-1 (see FIG. 9) protrudes from and is formed on the inner surface of the slide groove 211 to hold the terminal member 1222 so as not to be displaced outward from the slide groove 1211. The second engagement step 1224-1 (see FIG. 9) may be formed in the shape of a continuous ring along the circumference of the slide groove 1211. In some embodiments, a plurality of second engagement steps 1224-1 may be formed on the inner surface of the slide groove 1211 at constant intervals.

The second engagement projection 1224-2 (see FIG. 9) protrudes from the outer surface of the terminal member 1222, and is engaged with the second engagement step formed on the inner surface of the slide groove 1211, thereby preventing the terminal member 1222 from being displaced from the slide groove 1211.

One side of the light emitting means 1230 is connected to the power transmission means 1210 and converts the power transmitted through the slide groove 1211 into DC power to emit light. The light emitting means 1230 includes one or more light emitting means (e.g., an LED bulb or the like) for emitting light with the supplied power.

FIG. 9 is a view illustrating operation of the lighting module unit shown in FIG. 8.

Referring to FIG. 9, as shown in FIG. 9(a), at least one region of the terminal member 1222 protrudes from the slide groove 1211 until the terminal member is inserted into the insertion groove 111 of the power source contact terminal portion 100.

On the other end, as shown in FIG. 9(b), when the terminal member 1222 is inserted into the insertion groove 111 and thus comes into contact with the first power transmission member 121, the terminal member 1222 moves backward along the slide groove 1211. Accordingly, after slightly pushing one side of the lighting module unit 1200 coupled with the power source contact terminal portion 100, the user can easily couple the opposite side of the lighting module unit 1200 to the support 300. Once the opposite side of the lighting module unit 1200 is coupled to the support 300, the terminal portion 1222 may move forward along the slide groove 1211 to stably support the lighting module unit 1200 in cooperation with the support 300.

FIG. 10 is a view illustrating an elastic bar shown in FIG. 5.

Referring to FIG. 8, the elastic bar 230 includes a support means 231, a fitting means 232, and one or more second elastic means 233.

One end of the support means 231 is connected to the opposite side of the lighting module 220, and the opposite side thereof supports the lighting module 220 as the fitting means 232 is slid by the sliding means 234.

One side of the fitting means 232 is slid by the sliding means 234 on the opposite side of the lighting module 220 and is returned by the elastic force provided 233 from the second elastic means 233, while the opposite side thereof is fitted into the support 300.

In one embodiment, the sliding means 234 may include a sliding groove 2341 and a sliding projection 2342.

The sliding groove 2341 is formed on the opposite side of the support means 231 and slidably moves the sliding projection 2342 after the sliding projection is inserted thereinto. Here, the sliding groove 2341 is provided with a projection at the entrance thereof to prevent the sliding projection 2342 from being displaced and removed. The sliding projection 2342 protrudes from one side of the fitting means 232 and slidably moves after being inserted into the sliding groove 2341. Here, the sliding projection 2342 is preferably provided with a projection at the end thereof so as not to be displaced and removed from the sliding groove 2341.

The second elastic means 233 is arranged between the support means 231 and the fitting means 232 and is formed of an elastic material (for example, a spring or the like) to provide elastic force to the fitting means 232.

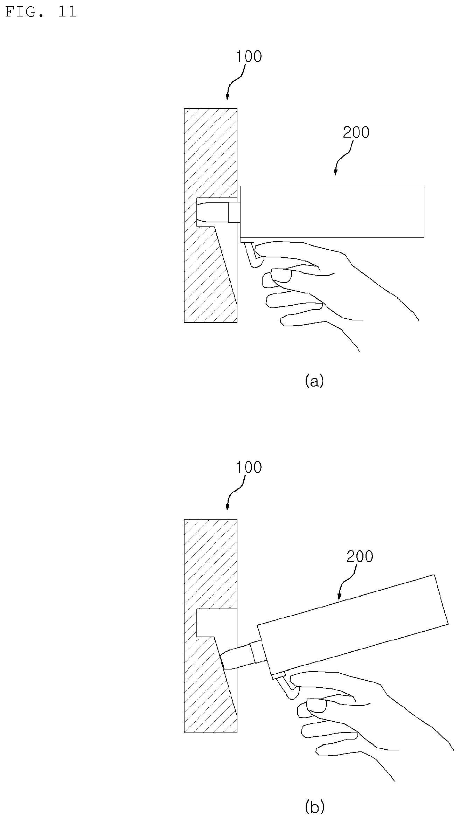

FIG. 11 is a view illustrating a grip member 250 of a lighting module unit 200 according to an embodiment of the present invention.

The grip member 250 is formed on a lower portion or both lateral portions of one side of the lighting module unit 200. By lowering or raising the lighting module unit 200, which is tightened to the power source contact terminal portion 100, the lighting module unit 200 can be easily tightened to or separated from the power source contact terminal portion 100.

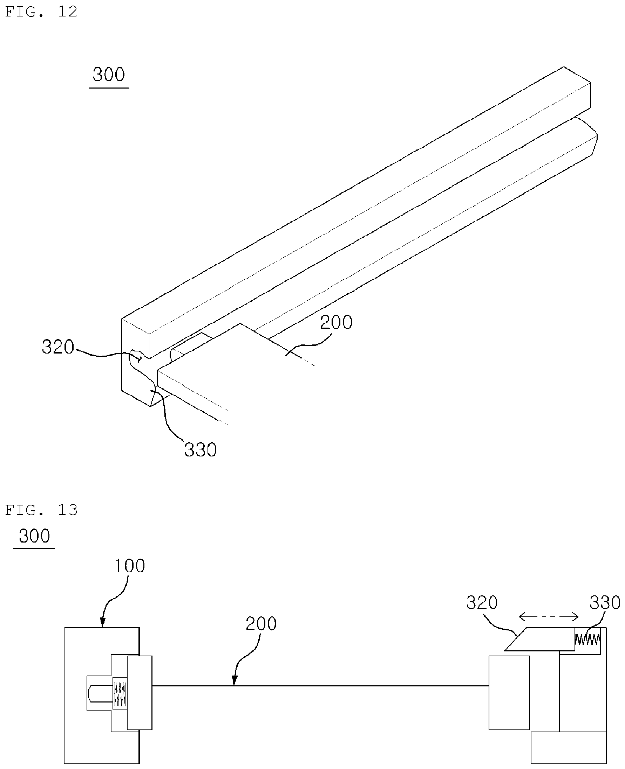

FIGS. 12 and 13 are views illustrating a support according to the first embodiment of the present invention.

Referring to FIGS. 12 and 13, the support 300 includes a tightening groove member 310.

The tightening groove member 310 is inserted into and fixedly tightened to the opposite side of the lighting module unit 200 (more specifically, the elastic bar 230). The support 300 configured as described above may further include an inclined tightening member 320 (see FIG. 10) and an elastic member 330 (see FIG. 13).

The inclined tightening member 320 is formed at an upper portion of the support 300 and is formed such that one side thereof is inclined. When the lighting module unit 200 is inserted, the inclined tightening member 320 is moved to the opposite side. After the lighting module unit 200 is inserted, the inclined tightening member is returned by the elastic force from the elastic member 330 to be tightened to the opposite side of the lighting module unit 200.

The elastic member 330 is connected to the opposite side of the inclined tightening member 320 and is formed of an elastic material (for example, a spring or the like) to provide elastic force to the inclined tightening member 320.

In one embodiment, the support 300 may be provided at an upper portion thereof with a groove into which the inclined tightening member 320 is inserted and slidably moved, and the elastic member 330 may be tightened to the opposite side of the groove.

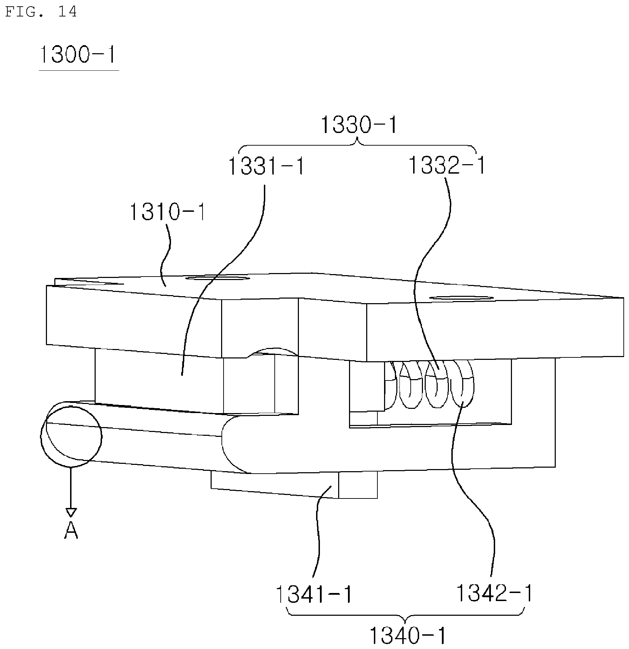

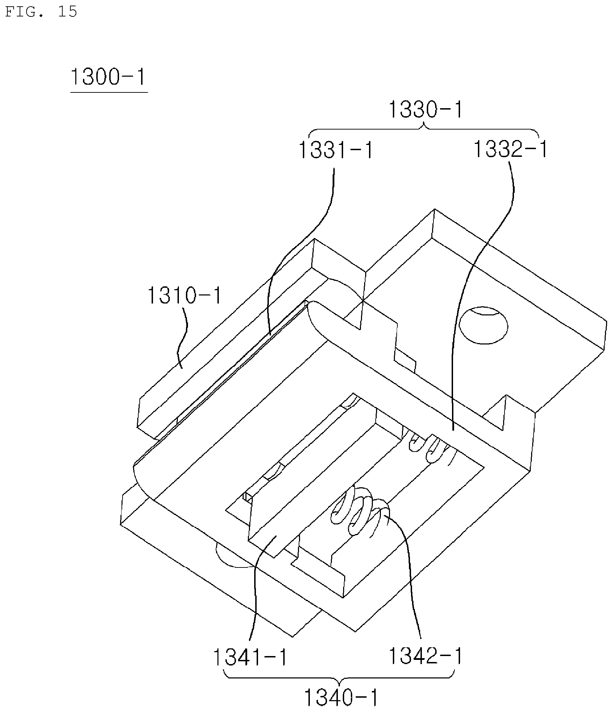

FIGS. 14 and 15 are views illustrating a support according to a second embodiment of the present invention.

Referring to FIGS. 14 and 15, a support 1300-1 includes a housing member 1310-1, a tightening groove member 1320-1, an elastic member 1330-1, and a pushing member 1340-1.

The housing member 1310-1 may be fixedly installed in at least one area of the lamp 1 through screws, adhesives, or the like, or may be detachably installed. The housing member 1310-1 may be modified into various shapes corresponding to the shape of the lamp 1 and the shape of the lighting module unit 100. For example, the housing member 1310 may be formed in the shape of a straight line segment as shown in FIGS. 14 and 15 to accommodate one side of the lighting module unit 200. When a plurality of lighting module units 200 is installed in the lamp 1, the housing member 1310-1 in the shape of a straight line segment may serve to couple and support connection portions of the plurality of lighting module units 200. In addition, according to an embodiment, a corner area of the lighting module unit 200 may be inserted into and tightened to the housing member 1310-1 of the shape of a straight line segment.

In one embodiment, the housing member 1310-1 may be formed such that the upper portion or the lower portion (region A) of the inlet thereof provided with the tightening groove member 1320-1 is inclined inward or outward at a predetermined inclination (for example, an angle of 10° to 30°). Thereby, the housing member may guide the lighting module unit 200 such that the lighting module unit 200 can be easily inserted into the tightening groove member 1320-1 along the inclined surface.

In an embodiment, the housing member 1310-1 may facilitate insertion and separation of the lighting module unit 200 into and from the housing member 1310-1 as the upper portion of lower portion of the inlet of the housing member provided with the tightening groove member 1320-1 is formed in an arc shape.

The tightening groove member 1320-1 is formed inside the housing member 1310-1 so as to have a recessed shape corresponding to that of one side of the lighting module unit 200. By inserting one side of the lighting module unit 100 into the tightening groove member 1320-1, the lighting module unit 200 may be stably supported on the housing member 1310-1.

The elastic member 1330-1 is arranged inside the tightening groove member 1320-1 and is formed of an elastic material (for example, a spring or the like) to provide elasticity to one side of the lighting module unit 200 when the one side of the lighting module unit 200 is inserted into the tightening groove member 1320-1. Specifically, the elastic member includes an elastic unit 1331-1 and a contact cover unit 1332-1.

The elastic unit 1331-1 is formed of an elastic material (for example, spring, silicone, rubber, etc.) and is accommodated in the tightening groove member 1320-1. The elastic restoring force of the elastic unit 1331-1 is used to provide elasticity to the lighting module unit 200 when the lighting module unit 200 is tightened to the tightening groove member 1320-1. Thereby, when the user installs the lighting module unit 200 on the lamp 1 or removes the lighting module unit 200 from the lamp 1, a sufficiently long separation distance for installation or removal corresponding to the contraction distance of the elastic unit 1331-1 may be secured, and thus the user can easily install and remove the lighting module unit 200.

One side of the contact cover unit 1332-1 is fixed to the elastic unit 1331-1 and the opposite side of the contact cover unit 1332-1 contacts the lighting module unit 200 to transmit the force transmitted from the lighting module unit 200 to the elastic unit 1331-1). The front surface of the contact cover unit 1332-1 which is in contact with the lighting module unit 200 may be made of a material providing elastic restoring force such as silicone, rubber, synthetic rubber, and sponge such that shock can be absorbed when the lighting module unit 200 is inserted. Thereby, wear and damage of the components of the lighting module unit 200 and the support 1320-1 may be reduced, and accordingly the service life of the lighting module unit 200 and the support 1320-1 may be enhanced.

The pushing member 1340-1 is connected to the tightening groove member 1320-1 so as to facilitate separation of the lighting module unit 200 by pushing the lighting module unit 200 when the lighting module unit 200 is replaced. Specifically, the pushing member 1340-1 may include a pushing unit 1341-1 and a spring unit 1342-1.

The pushing unit 1341-1 is arranged in the tightening groove member 1320-1 and reciprocates along the tightening groove member 1320-1 to contact and push the lighting module unit 200 forward. A part of the area of the pushing unit 1341-1 protrudes outward from the housing member 1310-1, and contacts the user's finger. An opening area may be formed in an area of the housing member 1310 to which the pushing unit 1341-1 is connected, such that the pushing unit 1341-1 can protrude and reciprocates.

One side of the spring unit 1342-1 is fixed to the pushing unit 1341-1 and the other side of the spring unit 1342-1 is fixed to the inside of the tightening groove member 1320-1. The spring unit 1342-2 provides elasticity to the pushing unit 1342-2 when the lighting module unit 200 is pushed out of the tightening groove member 1320-1. As shown in FIGS. 14 and 15, the spring unit 1342-1 can be omitted when the elastic unit 1331-1 is present. That is, the elastic unit 1331-1 can perform the function of the spring unit 1342-1 as well. In this case, a separate spring unit 1342-1 need not to be provided, and therefore the configuration can be simplified.

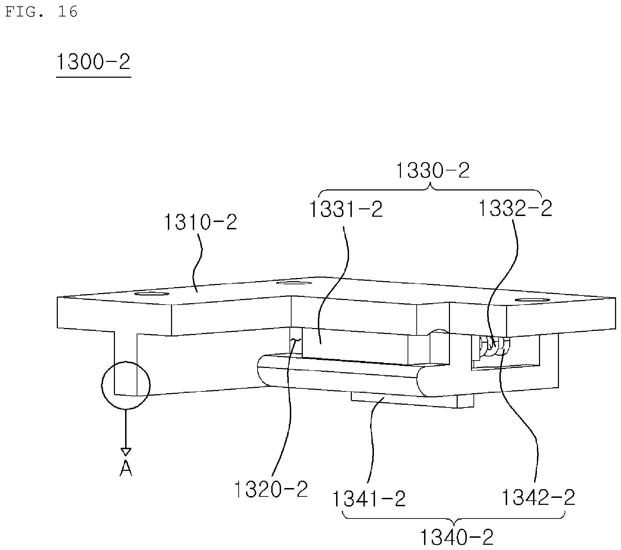

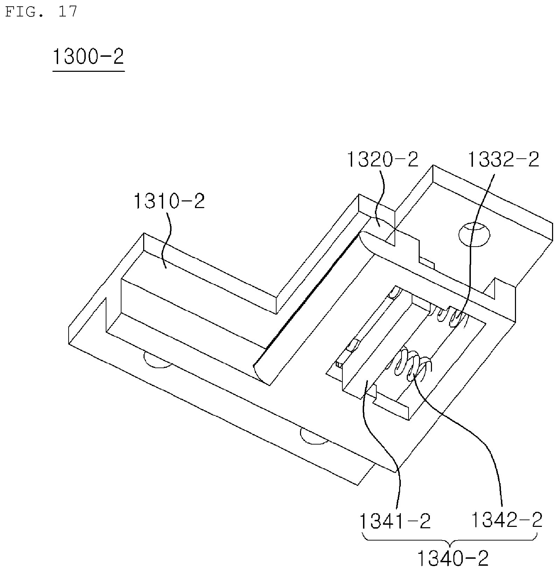

FIGS. 16 and 17 are views illustrating a support according to a third embodiment of the present invention.

Referring to FIGS. 16 and 17, a support 1300-2 according to another embodiment of the present invention includes a housing member 1310-2, a tightening groove member 1320-2, an elastic member 1330-2, and a pushing member 1340-2.

The housing member 1310-2 may be fixedly installed in at least one area of the lamp 1 through screws, adhesives, or the like, or may be detachably installed. Further, as shown in FIGS. 16 and 17, it may be formed in an L shape. That is, the L-shaped housing member 1310-2 allow a corner of the lighting module unit 200 to be inserted thereinto to stably support the lighting module unit 200 on the lamp 1.

In one embodiment, the upper portion or the lower portion of the inlet of the housing member 1310-2 where the tightening groove member 1320-2 is formed may be inclined at a predetermined inclination (for example, an angle of 10° to 30°), thereby guiding the lighting module unit 200 such that the lighting module unit 200 can easily inserted into the tightening groove 1320-2 along the inclined surface.

The tightening groove member 1320-2 is formed in the inside of the housing member 1310-2 in a recessed manner to correspond to the shape of the corner of the lighting module unit 200. The tightening groove member 1320-2 may stably support the lighting module unit 200 on the housing member 1320-2 by allowing the corner of the lighting module unit 200 to be inserted and tightened thereinto.

Configurations and functions of the elastic member 1330-2 and the pushing member 1340-2 are the same as those described with reference to FIGS. 14 and 15, and thus a detailed description thereof is omitted to avoid redundant explanations.

In one embodiment, a plurality of elastic members 1330-2 may be formed inside the housing member 1310-2. Accordingly, the user can freely select either the horizontal direction or the vertical direction of the lighting module unit 200 to couple the lighting module unit 200 to the support 1300-3 or to easily separate the portion 200.

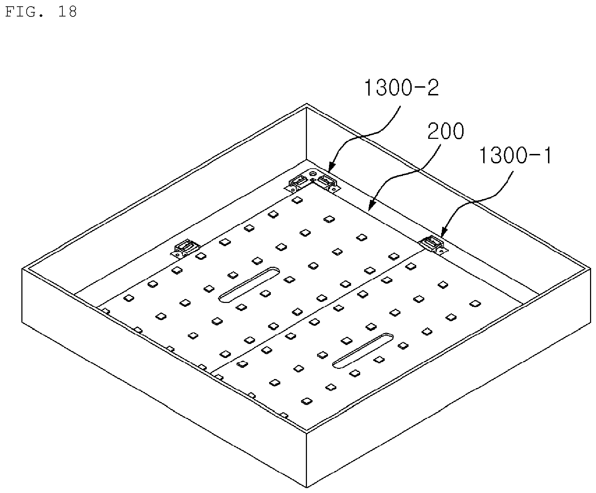

FIG. 18 illustrates a lighting module tightening device for a lamp to which the support shown in FIGS. 14 to 17 is applied.

Referring to FIG. 18, the lighting module tightening device for a lamp according to another embodiment of the present invention may be supported by a plurality of supports 1300-1 and 1300-2. As shown in FIGS. 18, the support 1300-2 according to the third embodiment may include a plurality of (for example, two) elastic members 1320-2 inside the housing member 1310-2 . Accordingly, the user can more easily tighten and separate the lighting module unit 200.

Embodiments of the present invention are not limited to the above-described apparatus and/or method, but may be implemented by a program for realizing a function corresponding to the configuration of the embodiment of the present invention, a recording medium on which the program is recorded, or the like, and such an embodiment can be readily implemented by those skilled in the art from the description of the embodiments described above.

While the present invention has been particularly shown and described with reference to exemplary embodiments thereof, it is to be understood that the invention is not limited to the disclosed embodiments, but, on the contrary, various changes and modifications made using the basic concept of the present invention defined in the appended claims are also within the scope of the present invention.

## Claims

1. A lighting module tightening device for a lamp, comprising:
a power source contact terminal portion formed on one side of the lamp and configured to be supplied with power and transmit the supplied power;
a lighting module unit having one side tightened to the power source contact terminal portion and configured to receive power from the power source contact terminal portion to emit light; and
a support formed on an opposite side of the lamp to face the power source contact terminal portion and configured to tighten and support an opposite side of the lighting module unit.

2. The lighting module tightening device according to claim 1, wherein the power source contact terminal portion comprises:
a power supply means formed on the one side of the lamp and having two insertion grooves for applying power, the power supply means being configured to be supplied with external power and supply the external power through the insertion grooves; and
two first contact means respectively provided in the insertion grooves and configured to provide elasticity to the lighting module unit when the lighting module unit is tightened into the insertion grooves and to transmit the power supplied through the insertion grooves to the lighting module unit.

3. The lighting module tightening device according to claim 2, wherein each of the first contact means comprises:
a first power transmission member formed inside each of the insertion grooves to transmit the power supplied through the insertion grooves;
a contact cover member arranged in each of the insertion grooves so as to slide along the insertion grooves in a reciprocating manner to contact the lighting module unit to transmit the power to the lighting module unit; and
a first elastic member having one side fixed to the power transmission member and an opposite side fixed to the contact cover member to provide elasticity to the contact cover member and transmit the power from the power transmission member to the contact cover member when the lighting module unit is tightened into the insertion grooves.

4. The lighting module tightening device according to claim 1, wherein the lighting module unit comprises:
two contact terminals tightened to the power source contact terminal portion on one side thereof to receive power from the power source contact terminal portion;
a lighting module connected to an opposite side of the contact terminals and comprising one or more light emitting means to emit light by the power supplied from the power source contact terminal portion; and
an elastic bar connected to an opposite side of the lighting module and tightened to the support.

5. The lighting module tightening device according to claim 4, wherein each of the contact terminals comprises:
a terminal means having one side tightened to the power source contact terminal portion to receive the power;
a connection means connected to the opposite side of the lighting module and provided with a through hole allowing the terminal means to be inserted thereinto and slidably move;
a sliding means having one side fixed to one side of the terminal means so as to slidably move together with the terminal means and an opposite side slidably inserted into one side of the connection means, the sliding means being returned by elastic force applied thereto; and
a first elastic means arranged between the connection means and the sliding means to provide the elastic force to the sliding means.

6. The lighting module tightening device according to claim 5, wherein the elastic bar comprises:
a support means connected to the opposite side of the lighting module to support the lighting module;
a fitting means slidably moved on an opposite side of the support means by the sliding means and returned by the elastic force applied thereto, an opposite side of the fitting means being fitted and tightened into the support; and
one or more second elastic means arranged between the support means and the fitting means to provide the elastic force.

7. The lighting module tightening device according to claim 1, wherein the lighting module unit comprises:
a power transmission means having two slide grooves and configured to transmit power through the slide grooves;
two second contact means formed in each of the slide grooves and configured to provide elasticity to the power source contact terminal portion when one side thereof is tightened to the power source contact terminal portion and to transmit the power received from the power source contact terminal portion to the slide grooves; and
a light emitting means connected to the power transmission means and configured to emit light by applying the power transmitted through the slide grooves.

8. The lighting module tightening device for lamp according to claim 7, wherein each of the second contact means comprises:
a second power transmission member formed in the slide grooves to transmit the power received from the power source contact terminal portion to the slide grooves;
a terminal member provided therein with an accommodation groove and configured to slidably move along the slide grooves in a reciprocating manner to contact the power source contact terminal portion to transmit the power received from the power source contact terminal portion to the second power transmission member; and
a second elastic member inserted into the accommodation groove to provide elasticity to the terminal member when the terminal member is tightened to the power source contact terminal portion.

9. The lighting module tightening device according to claim 8, wherein the lighting module unit further comprises:
a grip means formed at a lower portion of the one side of the lighting module unit, and lowered or raised by a finger placed therearound.

10. The lighting module tightening device according to claim 1, wherein the support comprises:
a housing member fixedly installed in at least one area of the lamp; and
a tightening groove member formed inside the housing member such that the one side of the lighting module unit is inserted and tightened thereinto.

11. The lighting module tightening device according to claim 10, wherein the support further comprises:
an elastic member arranged in the tightening groove member and configured to provide elasticity to the one side of the lighting module unit when the one side of the lighting module unit is inserted and tightened into the tightening groove member.

12. The lighting module device for lamp according to claim 11, wherein the elastic member comprises:
an elastic unit accommodated in the tightening groove member and configured to provide elasticity to the lighting module unit when the lighting module unit is tightened to the tightening groove member; and
a contact cover unit having one side fixed to the elastic unit and an opposite side contacting the lighting module unit to transmit force transmitted from the lighting module unit to the elastic unit.

13. The lighting module tightening device according to claim 10, wherein the housing member further comprises:
a pushing member installed in and connected to the tightening groove member and configured to push the lighting module unit.

14. The lighting module tightening device according to claim 13, wherein the pushing member comprises:
a pushing unit formed in the tightening groove member and reciprocating along the tightening groove member to contact and push the lighting module unit forward; and
a spring unit having one side fixed to the pushing unit and an opposite side fixed to an inside of the tightening groove member to provide elasticity to the pushing unit when the lighting module unit is pushed out of the tightening groove member.

15. The lighting module tightening device according to claim 10, wherein the housing member is inclined at an angle.

16. The lighting module tightening device according to claim 10, wherein the housing member is formed in an L shape to allow a corner of the lighting module unit to be inserted and tightened thereinto.

17. The lighting module tightening device according to claim 16, wherein the housing member comprises a plurality of elastic members formed inside the housing member.
